# EUROPEAN PATENT SPECIFICATION

(11) **EP 4 075 956 B1**
(45) Date of publication and mention of the grant of the patent: **17.04.2024**
(21) Application number: 20829696.2
(22) Date of filing: 11.12.2020
(51) Int. Cl.: A01K 5/00

(54) **CONTAINER DEVICE FOR ANIMAL FEED, AND FEEDING SYSTEM, LOADER WAGON AND AUTOMATIC HARVESTING, TRANSPORTING AND FEED DOSING DEVICE COMPRISING THE CONTAINER DEVICE**
BEHÄLTERVORRICHTUNG FÜR TIERFUTTER, FÜTTERSYSTEM, LADEWAGEN UND AUTOMATISCHE ERNTE-, TRANSPORT- UND FUTTERDOSIERVORRICHTUNG MIT DER BEHÄLTERVORRICHTUNG
DISPOSITIF DE TYPE CONTENANT POUR ALIMENTATION ANIMALE, ET SYSTÈME D'ALIMENTATION, REMORQUE AUTOCHARGEUSE ET DISPOSITIF AUTOMATIQUE DE RÉCOLTE, DE TRANSPORT ET DE DOSAGE D'ALIMENTS POUR ANIMAUX COMPRENANT LE DISPOSITIF DE TYPE CONTENANT

(30) Priority: 19.12.2019 NL 2024507
(43) Date of publication of application: 26.10.2022
(73) Proprietor: Lely Patent N.V., 3147 PB Maassluis (NL)
(72) Inventor: VAN DEN BERG, Karel, 3147 PB Maassluis (NL); BLOKLAND, Korstiaan Cornelis, 3147 PB Maassluis (NL); VAN DIJK, Samuel, 3147 PB Maassluis (NL)
(74) Representative: Octrooibureau Van der Lely N.V.
(86) International application number: PCT/NL2020/050783
(87) International publication number: WO 2021/125942

(56) References cited:
- EP-A1- 2 710 881
- US-A- 4 195 958
- US-A1- 2012 008 457

## Description

The present invention relates to a container device for animal feed.

Such a device is known from the prior art. The known devices have several drawbacks. EP 1 749 440 B1 discloses a feed dosing device and teaches avoiding blockages by means of pressure detection and temporarily stopping or reversing the direction of movement of certain elements. In this way, blockages cannot be avoided or solved effectively and reliably. EP 2 710 881 A1 discloses a distributor machine for shredding and distributing fibrous materials such as hay, straw, maize and grass silage, for use as animal fodder and litter products. There is a need for an improved device

It is an object of the present invention to provide an improved container device for animal feed.

The invention achieves the object at least in part by means of a device according to claim 1, in particular a container device for animal feed, the container device having an internal transport device for transporting the feed to a number of rotatable discharging elements of said container device for unloading the feed, and a control unit configured for controlling the transport device and the discharging elements, wherein the discharging elements are provided with sensing means for detecting a blocking or an expected blocking caused by the feed, wherein in response to the sensing means the control unit is configured for changing over both the transport device and the discharging elements temporarily into a coordinated deblocking mode, characterized in that the control unit is configured to, in the deblocking mode, control the transport device to move back over a certain distance in the direction opposite to the normal direction of transport of the feed and to control the discharging elements to slow down or stop their rotation. The invention is based on the insight that a coordinated action involving both the transport device and the discharging elements enables a more reliable deblocking. This combined action has proven to work well and give good results.

The container device may e.g. be part of a loader wagon, or a loading or dosing container in a(n automatic) feeding device, or an unmanned, automatic harvesting and feeding device.

Suitable and advantageous embodiments are described in the dependent claims, as well as in the description below.

According to an embodiment, the control unit in the deblocking mode is configured to subsequently control the discharging elements to perform a back and forth movement in different rotational directions. This movement helps in loosening any blocked feed. In this way, the deblocking is further improved.

Advantageously, the sensing means comprise means for measuring the power and/or the torque and/or the number of revolutions of the discharging elements. This constitutes a simple and reliable implementation.

In accordance with an embodiment, the control unit is configured to activate the coordinated deblocking mode as soon as the sensing means reach or pass a first threshold value. This constitutes a simple and straightforward solution. The first threshold value indicates a detected blocking.

In accordance with a further embodiment, in response to the sensing means the control unit is also configured for changing over both the transport device and the discharging elements temporarily into a coordinated preliminary deblocking mode, wherein the control unit is configured to activate the coordinated preliminary deblocking mode as soon as the sensing means reach or pass a second threshold value during at least a certain minimum amount of time, wherein the first threshold value is higher than the second threshold value, wherein the control unit in the preliminary deblocking mode is configured to control the transport device to move back over a further certain distance in the direction opposite to the normal direction of transport of the feed and to control the discharging elements to slow down or stop their rotation. With the additional preliminary deblocking mode, even better results are achieved. Blockings can be avoided.

Contrary to the first threshold value, the (typically lower) second threshold value must be reached or passed for at least a minimum time interval. This indicates that there is not yet a blocking, but an expected blocking.

In this way, the preliminary deblocking mode is usually reached first. Thus, blockings can be avoided before they occur.

Certain actions in the preliminary blocking mode preferably may differ from the ones in the deblocking mode. The further certain distance in the preliminary deblocking mode may be shorter than the certain distance in the deblocking mode.

According to yet another embodiment, a dosing device is provided for dosing the feed outside the container device, the discharging elements being suitable to unload the feed onto or into the dosing device. This enables a convenient and accurate unloading process.

Advantageously, the dosing device is connected to the control unit and is suitable for dosing the feed on both lateral sides of the container device and the dosing device is suitable for automatically alternatingly dosing the feed on either lateral side of the container device, preferably in dependence on the amount of feed needed on both lateral sides of the container device. This is a practical implementation, especially useful in a barn with feed fences on opposite sides of a feeding corridor.

In this way, a highly efficient dosing process is realised.

The feed can be divided proportionally by controlling the dosing times on both sides accordingly.

In yet another embodiment, the dosing device comprises a dosing belt conveyor, sensing means being provided for determining the distance of the dosing belt conveyor to respective feed fences on both lateral sides of the container device, the control unit being suitable for controlling the speed of the dosing belt conveyor in dependence on its distance to the feed fences on both lateral sides of the container device. This further optimizes the system. If the feed fence is near the dosing belt, the speed can be held low. If the feed fence is positioned further away, the belt can be driven at a higher speed.

It is noted that the dosing device embodiments and features can also be used independently of the features according to the invention, such as the coordinated deblocking mode.

The invention also relates to a feeding system with an autonomously movable dosing device for dosing feed at a feeding location, said system comprising such a container device for filling the dosing device with feed.

The invention also relates to a loader wagon comprising such a container device.

The invention also relates to an unmanned, autonomously movable, automatic harvesting, transporting and feed dosing device comprising such a container device.

The invention will now be further explained with reference to the following Figure.
- Figure 1 schematically shows, partially in cross-section, an embodiment of a container device for animal feed according to the invention as part of an unmanned, autonomously movable, automatic harvesting, transporting and feed dosing device;
- Figure 2 schematically shows an embodiment of a container device according the invention as part of a dosing container for dosing feed, and
- Figure 3 schematically shows an embodiment of a container device according the invention as part of a loader wagon.

The autonomous, unmanned device 1 is a vehicle with a container device 2 defining an internal storage space 3 on a frame 4 with wheels 5. Not shown are drive means for the autonomous, unmanned device 1. The front side (in the drawing left) is provided with automatic harvesting and loading means 6 for harvesting and loading crop 7 (e.g. grass, lucerne or other animal feed). The harvesting means shown here are in the form of an automatic mowing device 8. Furthermore, there are automatic loading means 9 (e.g. an elevating conveyor belt) with drive means 10 for conveying the harvested crop 7 into the storage space 3 inside the container 2. A height sensor 11 is provided at the outlet of the loading means 9.

The container device 2 has an internal transport device 12 (e.g. a flat conveyor belt or a movable loading floor) with drive means 13 for transporting feed 7 rearwardly in the container 2 (to the right in the figure) as illustrated by the arrow A. A number of feed piles 14-1, 14-2, ... , 14-n (shown as a dashed line), with variable n > 1, is formed in the storage space 3 inside the container 2 by loading the harvested feed 7 via the loading means 9. For example, when n = 3, feed pile 14-3 is first formed, then transported to the rear with the aid of the transport device 12 as soon as the height sensor 11 senses that the feed pile has reached a certain height, after which feed pile 14-2 is formed and shifted rearwardly, followed by the formation of feed pile 14-1.

At the rear side (in the drawing right) there are provided means 15 for automatically unloading feed at an unloading location. The unloading means 15 comprise a number of rotatable discharging elements (two in the embodiment shown) in the form of toothed dosing rollers 16 with drive means (which are not shown). By way of example, the teeth of the discharging elements 16 can be 19 cm long and fitted to the respective central part under a slight angle (not shown in the drawing), so that the circle defined by the rotating teeth has a radius of about 16 cm. The discharging elements 16 are provided with sensing means 17 for detecting a blocking or an expected blocking caused by the feed. Dosing means, here shown in the form of a side discharge dosing belt conveyor 18, are provided for dosing the feed on both lateral sides of the autonomous, unmanned vehicle 1.

A control unit 19, with the aid of which the autonomous, unmanned device 1 is controlled and operated (e.g. a computer comprising a processor and navigation means), is also suitable for controlling the transport device 12 and the discharging elements 16. In accordance with the invention, the control unit 19, in response to the sensing means 17, is suitable for changing over both the transport device 12 and the discharging elements 16 temporarily into a coordinated deblocking mode, as will be further elucidated below.

The unmanned automatic harvesting and feed dosing device 1 can determine a feed demand, automatically harvest feed at a crop field following a path specified by the control unit 19 and then transport the feed to an unloading location (not shown, e.g. a feed kitchen or a barn with a feed fence), where the fresh feed can be dosed, all under the control of the control unit 19. After unloading the feed, the autonomous, unmanned device 1 can return to the crop field for a next harvesting run.

When the transport device 12 moves the feed to the rear of the container 2 and the discharging elements 16 discharge the feed onto the dosing device 18 for unloading, a blocking may occur. In accordance with the invention, such blockings are avoided and/or solved. To this end, the discharging elements 16 are provided with sensing means 17 for detecting a blocking or an expected blocking caused by the feed, wherein in response to the sensing means 17 the control unit 19 is suitable for changing over both the transport device 12 and the discharging elements 16 temporarily into a coordinated deblocking mode. In the deblocking mode the control unit 19 controls the transport device 12 to move back over a certain distance (e.g. 30 cm) in the direction opposite to the normal direction of transport of the feed and controls the discharging elements 16 to slow down or stop their rotation. This combined action solves any blockings occurring at the discharging elements 16. It has proven to work well and give good results in decongesting and disentangling feed stuck in the machine.

To further improve the deblocking, the control unit 19 in the deblocking mode subsequently controls the discharging elements 16 to perform a back and forth movement in different rotational directions. These subsequent movements further assist in loosening any blocked feed. The control unit 19 controls the discharging elements 16 to perform the back and forth movement at a lower rotational frequency than the normal frequency used for unloading the feed. This has proven to be effective. After the to and fro movements the deblocking mode is finished and the device resumes its normal loading, transporting and unloading activities. The transport device 12 moves feed rearwardly and the discharging elements 16 discharge the feed.

The control unit 19 determines the certain distance over which the transport device 12 is moved back in dependence on the dimensions of the discharging elements 16. This has been found to give optimal results. Long discharging elements 16 require a further backward movement than short ones.

Advantageously, the sensing means 17 comprise means for measuring the power and/or the torque and/or the number of revolutions of the discharging elements 16. This constitutes a simple and reliable implementation. In the embodiment shown the drive means for the discharging elements 16 are formed by electric motors, but of course other drive means are also possible (e.g. hydraulic).

It is noted that the loading of the feed 7 into the storage space 3 of the container 2 by means of the automatic harvesting and loading means 6 is not essential to the invention. Other ways of loading the feed 7 into the storage space 3 (e.g. using a crane or a feed grabber) are possible.

The control unit 19 activates the coordinated deblocking mode as soon as the sensing means 17 reach or pass a first threshold value. The first, relatively high threshold value indicates a detected blocking.

To further improve the device, in response to the sensing means 17 the control unit 19 is also suitable for changing over both the transport device 12 and the discharging elements 16 temporarily into a coordinated preliminary deblocking mode. With the additional preliminary deblocking mode, even better results are achieved. Blockings can be avoided before they actually occur. The control unit 19 activates the coordinated preliminary deblocking mode as soon as the sensing means 17 reach or pass a second threshold value during at least a certain minimum amount of time. Contrary to the first threshold value, the (typically lower) second threshold value must be reached or passed for at least a minimum time interval, e.g. 4 seconds. This indicates that there is not yet a blocking, but an expected blocking. The first threshold value is higher than the second threshold value. In this way, the preliminary deblocking mode is usually reached first. Thus, blockings can be avoided before they occur.

The control unit 19 in the preliminary deblocking mode controls the transport device 12 to move back over a further certain distance (e.g. 10 cm) in the direction opposite to the normal direction of transport of the feed and controls the discharging elements 16 to slow down or stop their rotation. Certain actions in the preliminary blocking mode preferably differ from the ones in the deblocking mode. The further certain distance in the preliminary deblocking mode, e.g. 10 cm, may be shorter than the certain distance in the deblocking mode, e.g. 30 cm. This has proven to be effective. After the transport device 12 has been moved back, the preliminary deblocking mode is finished and the device resumes its normal loading, transporting and unloading activities. The transport device 12 moves feed rearwardly and the discharging elements 16 discharge the feed.

Advantageously, a dosing device 18 is provided for dosing the feed outside the container device 2, the discharging elements 16 being suitable to unload the feed onto or into the dosing device 18. This enables a convenient and accurate unloading process. E.g., the autonomous, unmanned device 1 moves along a feed fence while unloading and dosing the feed to animals via the side discharge 18. The dosing device 18 is also connected to the control unit 19 and is suitable for dosing the feed on both lateral sides of the container device 2. This is a practical implementation, especially useful in a barn with feed fences on opposite sides of a feeding corridor (not shown).

The dosing device 18 is suitable for automatically alternatingly dosing the feed on either lateral side of the container device 2. In this way, a highly efficient dosing process is realised. The control unit 19 controls the automatic alternation of the dosing device 18 in dependence on the amount of feed needed on both lateral sides of the container device 2. This gives optimal results. The feed can be divided proportionally by controlling the dosing times on both sides accordingly. In this way, time can be saved, as it is not necessary to drive the unmanned device 1 through the feeding corridor twice.

In an embodiment, the dosing device comprises a dosing belt conveyor 18, sensing means (not shown) being provided for determining the distance of the dosing belt conveyor 18 to respective feed fences on both lateral sides of the container device 2, the control unit 19 being suitable for controlling the speed of the dosing belt conveyor 18 in dependence on its distance to the feed fences on both lateral sides of the container device 2. This further optimizes the system. If the feed fence is near the dosing belt 18, the speed can be held low. If the feed fence is positioned further away, the belt 18 can be driven at a higher speed.

The unloading is finished e.g. when a specified amount of feed has been unloaded, orwhen the storage space 3 in the container2 is empty, orwhen the unmanned device 1 reaches the end of a feed fence.

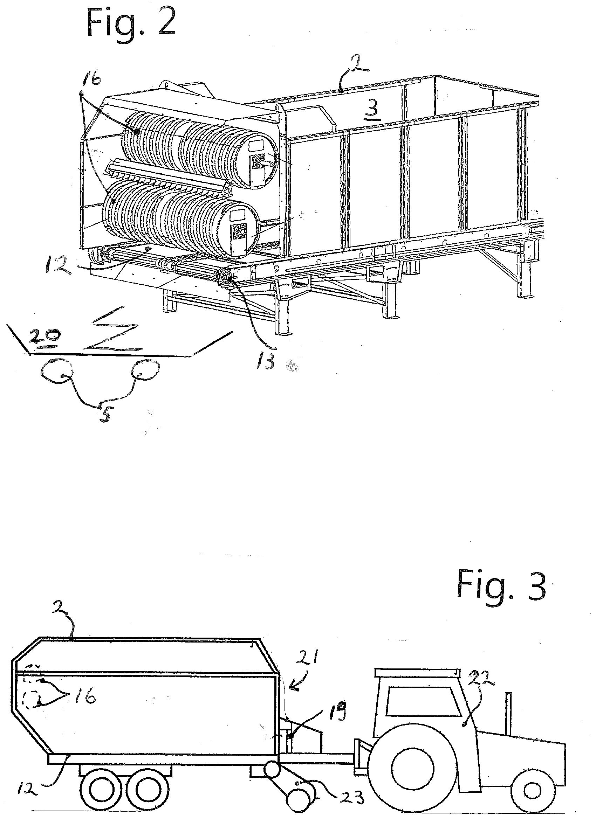

Figure 2 shows a feeding system with an autonomously movable dosing device in the form of a feed mixer 20 for dosing feed at a (not depicted) feeding location. This feed mixer 20 is supported by wheels 5 on the ground but can also be hanging on a rail. In the storage space 3 of container device 2 a certain stock of feed is provided. The stock of feed can be a bale of compressed hay or straw or a pile of loose bulk feed like chopped maize, potatoes. By powering the drive means 13 the transport device 12 moves the bale or feed pile towards the rotatable discharging elements 16. The discharging elements 16 comprises knives for cutting and loosening compressed feed. Loosened feed will drop into the container of the feed mixer 20. The feeding system may comprise several container devices 2 containing different types of feed in order to make a feed mixture in the container of the feed mixer 20.

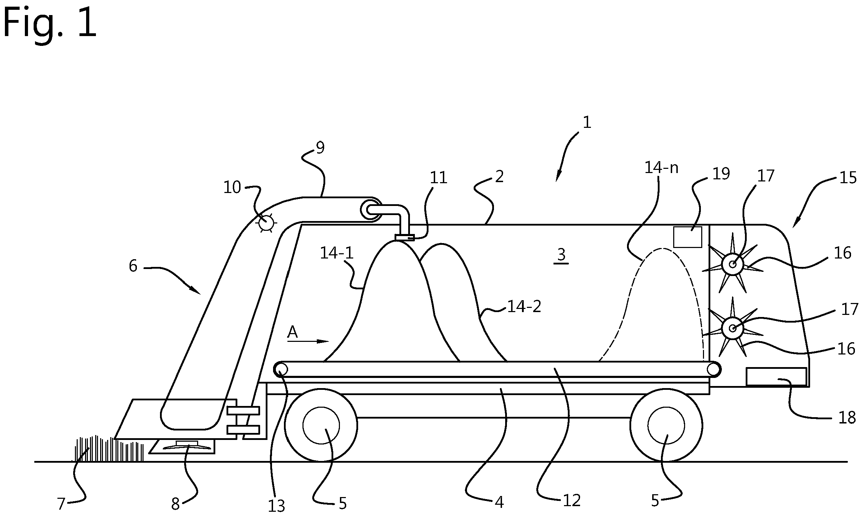

Figure 3 shows a loader wagon 21 comprising a container device 2 according the invention. The loader wagon 21 comprises loading means in the form of a so called pick-up 23 for picking up feed (hay or grass) from the ground and for filling the container device 2. The loader wagon 21 further comprises a transport device, discharging elements 16 and a non-depicted dosing device, similar as those of the embodiment of Figure 1. The transport device 12 and the discharging elements 16 can be powered electrically or hydraulically by the power means of the tractor 22 in a known way and are controlled by a control unit 19 similar as described in the embodiment of Figure 1. The loader wagon 21 can typically be used as a feeding device by means of a non-depicted dosing device similar as described in the embodiment of Figure 1 or for making a silage stack. In the latter case, the content of the container device 2 is discharged at the back of the container device 2.

## Claims

1. Container device (2) for animal feed, the container device (2) having an internal transport device (12) for transporting the feed (14-1, 14-2) to a number of rotatable discharging elements (16) of said container device (2) for unloading the feed (14-n), and a control unit (19) configured for controlling the transport device (12) and the discharging elements (16), wherein the discharging elements (16) are provided with sensing means (17) for detecting a blocking or an expected blocking caused by the feed, wherein in response to the sensing means (17) the control unit (19) is configured for changing over both the transport device (12) and the discharging elements (16) temporarily into a coordinated deblocking mode, **characterized in that** the control unit (19) is configured to, in the deblocking mode, control the transport device (12) to move back over a certain distance in the direction opposite to the normal direction of transport of the feed and to control the discharging elements (16) to slow down or stop their rotation.

2. Device according to claim 1, wherein the control unit (19) in the deblocking mode is configured to subsequently control the discharging elements (16) to perform a back and forth movement in different rotational directions.

3. Device according to any one of claims 1 - 2, wherein the sensing means (17) comprise means for measuring the power and/or the torque and/or the number of revolutions of the discharging elements (16).

4. Device according to any one of claims 1 - 3, wherein the control unit (19) is configured to activate the coordinated deblocking mode as soon as the sensing means (17) reach or pass a first threshold value.

5. Device according to claim 4, wherein in response to the sensing means (17) the control unit (19) is also configured for changing over both the transport device (12) and the discharging elements (16) temporarily into a coordinated preliminary deblocking mode, wherein the control unit (19) is configured to activate the coordinated preliminary deblocking mode as soon as the sensing means (17) reach or pass a second threshold value during at least a certain minimum amount of time, wherein the first threshold value is higher than the second threshold value, wherein the control unit (19) in the preliminary deblocking mode is configured to control the transport device (12) to move back over a further certain distance in the direction opposite to the normal direction of transport of the feed and to control the discharging elements (16) to slow down or stop their rotation.

6. Device according to any one of claims 1 - 5, wherein a dosing device (18) is provided for dosing the feed outside the container device (2), the discharging elements (16) being suitable to unload the feed onto or into the dosing device (18).

7. Device according to claim 6, wherein the dosing device (18) is connected to the control unit (19) and is suitable for dosing the feed on both lateral sides of the container device (2) and wherein the dosing device (18) is suitable for automatically alternatingly dosing the feed on either lateral side of the container device (2), preferably in dependence on the amount of feed needed on both lateral sides of the container device (2).

8. Device according to claim 7, wherein the dosing device comprises a dosing belt conveyor (18), sensing means being provided for determining the distance of the dosing belt conveyor (18) to respective feed fences on both lateral sides of the container device (2), the control unit (19) being suitable for controlling the speed of the dosing belt conveyor (18) in dependence on its distance to the feed fences on both lateral sides of the container device (2).

9. Feeding system with an autonomously movable dosing device for dosing feed at a feeding location, said system comprising a container device (2) according to any one of claims 1 - 8 for filling said autonomously movable dosing device with feed.

10. Loader wagon comprising a container device (2) according to any one of claims 1 - 8.

11. Unmanned, autonomously movable, automatic harvesting, transporting and feed dosing device (1) comprising a container device (2) according to any one of claims 1 -8.

## Patentansprüche

1. Behältervorrichtung (2) für Viehfutter, wobei die Behältervorrichtung (2) eine innere Transportvorrichtung (12) zum Transportieren des Futters (14-1, 14-2) zu einer Anzahl von drehbaren Austragelementen (16) der Behältervorrichtung (2) zum Abladen des Futters (14-n) und eine Steuereinheit (19) aufweist, die zum Steuern der Transportvorrichtung (12) und der Austragelemente (16) ausgestaltet ist, wobei die Austragelemente (16) mit Erfassungsmitteln (17) zum Detektieren einer durch das Futter verursachten Blockierung oder erwarteten Blockierung versehen sind, wobei die Steuereinheit (19) dazu ausgestaltet ist, als Reaktion auf die Erfassungsmittel (17) sowohl die Transportvorrichtung (12) als auch die Austragelemente (16) vorübergehend in einen koordinierten Deblockierungsmodus überzuwechseln, **dadurch gekennzeichnet, dass** die Steuereinheit (19) dazu ausgestaltet ist, in dem Deblockierungsmodus die Transportvorrichtung (12) so zu steuern, dass sie sich über eine gewisse Strecke in der Richtung zurückbewegt, die der normalen Transportrichtung des Futters entgegengesetzt ist, und die Austragelemente (16) so zu steuern, dass sie ihre Drehung verlangsamen oder stoppen.

2. Vorrichtung nach Anspruch 1, wobei die Steuereinheit (19) dazu ausgestaltet ist, dass sie in dem Deblockierungsmodus die Austragelemente (16) danach so steuert, dass sie eine Hin- und Herbewegung in verschiedenen Rotationsrichtungen durchführen.

3. Vorrichtung nach einem der Ansprüche 1 - 2, wobei die Erfassungsmittel (17) Mittel zum Messen der Leistung und/oder des Drehmoments und/oder der Anzahl von Umdrehungen der Austragelemente (16) umfassen.

4. Vorrichtung nach einem der Ansprüche 1 - 3, wobei die Steuereinheit (19) dazu ausgestaltet ist, den koordinierten Deblockierungsmodus zu aktivieren, sobald die Erfassungsmittel (17) einen ersten Schwellenwert erreichen oder überschreiten.

5. Vorrichtung nach Anspruch 4, wobei die Steuereinheit (19) auch dazu ausgestaltet ist, als Reaktion auf die Erfassungsmittel (17) sowohl die Transportvorrichtung (12) als auch die Austragelemente (16) vorübergehend in einen koordinierten vorläufigen Deblockierungsmodus überzuwechseln, wobei die Steuereinheit (19) dazu ausgestaltet ist, den koordinierten vorläufigen Deblockierungsmodus zu aktivieren, sobald die Erfassungsmittel (17) während mindestens einer gewissen Mindestzeitdauer einen zweiten Schwellenwert erreichen oder überschreiten, wobei der erste Schwellenwert höher als der zweite Schwellenwert liegt, wobei die Steuereinheit (19) dazu ausgestaltet ist, die Transportvorrichtung (12) in dem vorläufigen Deblockierungsmodus so zu steuern, dass sie sich über eine weitere gewisse Strecke in der Richtung zurückbewegt, die der normalen Transportrichtung des Futters entgegengesetzt ist, und die Austragelemente (16) so zu steuern, dass sie ihre Drehung verlangsamen oder stoppen.

6. Vorrichtung nach einem der Ansprüche 1 - 5, wobei eine Dosiervorrichtung (18) zum Dosieren des Futters außerhalb der Behältervorrichtung (2) vorgesehen ist, wobei die Austragelemente (16) zum Abladen des Futters auf oder in die Dosiervorrichtung (18) geeignet sind.

7. Vorrichtung nach Anspruch 6, wobei die Dosiervorrichtung (18) mit der Steuereinheit (19) verbunden und zur Dosierung des Futters an beiden lateralen Seiten der Behältervorrichtung (2) geeignet ist und wobei die Dosiervorrichtung (18) geeignet ist, das Futter automatisch abwechselnd an der einen oder der anderen lateralen Seite der Behältervorrichtung (2), vorzugsweise abhängig von der an beiden lateralen Seiten der Behältervorrichtung (2) benötigten Futtermenge, zu dosieren.

8. Vorrichtung nach Anspruch 7, wobei die Dosiervorrichtung einen Dosierbandförderer (18) umfasst, wobei Erfassungsmittel vorgesehen sind, um den Abstand des Dosierbandförderers (18) von jeweiligen Futterzäunen an beiden lateralen Seiten der Behältervorrichtung (2) zu bestimmen, wobei die Steuereinheit (19) zur Steuerung der Geschwindigkeit des Dosierbandförderers (18) in Abhängigkeit von seinem Abstand von den Futterzäunen an beiden lateralen Seiten der Behältervorrichtung (2) geeignet ist.

9. Füttersystem mit einer autonom bewegbaren Dosiervorrichtung zum Dosieren von Futter an einer Fütterstelle, wobei das System eine Behältervorrichtung (2) nach einem der Ansprüche 1 - 8 zum Füllen der autonom bewegbaren Dosiervorrichtung mit Futter umfasst.

10. Ladewagen, umfassend eine Behältervorrichtung (2) nach einem der Ansprüche 1 - 8.

11. Unbesetzte, autonom bewegbare, automatische Ernte-, Transport- und Futterdosiervorrichtung (1) umfassend eine Behältervorrichtung (2) nach einem der Ansprüche 1 - 8.

## Revendications

1. Dispositif formant récipient (2) destiné à des aliments pour animaux, le dispositif formant récipient (2) ayant un dispositif de transport interne (12) pour transporter les aliments (14-1, 14-2) jusqu'à un certain nombre d'éléments d'évacuation rotatifs (16) dudit dispositif formant récipient (2) pour décharger les aliments (14-n), et une unité de commande (19) conçue pour commander le dispositif de transport (12) et les éléments d'évacuation (16), les éléments d'évacuation (16) étant pourvus de moyens de détection (17) pour détecter un blocage ou un blocage attendu causé par les aliments, en réponse aux moyens de détection (17) l'unité de commande (19) étant conçue pour faire passer à la fois le dispositif de transport (12) et les éléments d'évacuation (16) temporairement dans un mode de déblocage coordonné, **caractérisé en ce que** l'unité de commande (19) est conçue pour, dans le mode de déblocage, commander le dispositif de transport (12) pour qu'il recule sur une certaine distance dans la direction opposée à la direction normale de transport des aliments et pour commander les éléments d'évacuation (16) afin de ralentir ou arrêter leur rotation.

2. Dispositif selon la revendication 1, l'unité de commande (19), dans le mode de déblocage, étant conçue pour commander ensuite les éléments d'évacuation (16) afin de réaliser un mouvement de va-et-vient dans différentes directions de rotation.

3. Dispositif selon l'une quelconque des revendications 1 et 2, les moyens de détection (17) comprenant des moyens pour mesurer la puissance et/ou le couple et/ou le nombre de tours des éléments d'évacuation (16) .

4. Dispositif selon l'une quelconque des revendications 1 à 3, l'unité de commande (19) étant conçue pour activer le mode de déblocage coordonné dès que les moyens de détection (17) atteignent ou dépassent une première valeur seuil.

5. Dispositif selon la revendication 4, en réponse aux moyens de détection (17) l'unité de commande (19) étant également conçue pour faire passer à la fois le dispositif de transport (12) et les éléments d'évacuation (16) temporairement dans un mode de déblocage préliminaire coordonné, l'unité de commande (19) étant conçue pour activer le mode de déblocage préliminaire coordonné dès que les moyens de détection (17) atteignent ou dépassent une deuxième valeur seuil pendant au moins une certaine durée minimum, la première valeur seuil étant supérieure à la deuxième valeur seuil, l'unité de commande (19) dans le mode de déblocage préliminaire étant conçue pour commander le dispositif de transport (12) pour qu'il recule sur une certaine autre distance dans la direction opposée à la direction normale de transport des aliments et pour commander les éléments d'évacuation (16) pour ralentir ou arrêter leur rotation.

6. Dispositif selon l'une quelconque des revendications 1 à 5, un dispositif de dosage (18) étant prévu pour doser les aliments à l'extérieur du dispositif formant récipient (2), les éléments d'évacuation (16) étant adaptés pour décharger les aliments sur ou dans le dispositif de dosage (18).

7. Dispositif selon la revendication 6, le dispositif de dosage (18) étant raccordé à l'unité de commande (19) et étant adapté pour doser les aliments des deux côtés latéraux du dispositif formant récipient (2) et le dispositif de dosage (18) étant adapté pour doser automatiquement alternativement les aliments de chaque côté latéral du dispositif formant récipient (2), de préférence en fonction de la quantité d'aliments nécessaire des deux côtés latéraux du dispositif formant récipient (2).

8. Dispositif selon la revendication 7, le dispositif de dosage comprenant un dispositif de transport à courroie de dosage (18), des moyens de détection étant prévus pour déterminer la distance entre le dispositif de transport à courroie de dosage (18) et des cornadis respectifs des deux côtés latéraux du dispositif formant récipient (2), l'unité de commande (19) étant adaptée pour commander la vitesse du dispositif de transport à courroie de dosage (18) en fonction de sa distance par rapport aux cornadis des deux côtés latéraux du dispositif formant récipient (2).

9. Système d'alimentation doté d'un dispositif de dosage mobile de manière autonome destiné à doser des aliments à un point d'alimentation, ledit système comprenant un dispositif formant récipient (2) selon l'une quelconque des revendications 1 à 8 pour remplir ledit dispositif de dosage mobile de manière autonome avec des aliments.

10. Remorque auto-chargeuse comprenant un dispositif formant récipient (2) selon l'une quelconque des revendications 1 à 8.

11. Dispositif (1) sans pilote mobile de manière autonome de récolte, de transport et de dosage d'aliments automatiques comprenant un dispositif formant récipient (2) selon l'une quelconque des revendications 1 à 8.
